# EUROPEAN PATENT APPLICATION

(11) **EP 0 569 606 A1**
(43) Date of publication of application: **18.11.1993**
(21) Application number: 92107811.9
(22) Date of filing: 08.05.1992
(51) Int. Cl.: A61C 17/26, A46B 7/08

(54) **Electric toothbrush**

(71) Applicant: GOLDEN CHANCELLERY, Tuen Mun, N.T. Hong Kong (HK)
(72) Inventor: Quan, Dang Kai, Quan Mun, N.T., HK-Hong Kong (HK)
(74) Representative: LOUIS, PÖHLAU, LOHRENTZ & SEGETH

(57) **Abstract**

An electric toothbrush comprising an elongate handle (10) housing an electric motor and potentially a battery source of power. A toothbrush head (18) can be removably connected to the elongate handle (10). A drive member (34) is driven by the electric motor and is located to extend into the toothbrush head (18). The head (18) has a plurality of bristle bunches or tufts (42) which are each mounted on a separate retaining body (50). Each body (50) is also provided with a pinion gear (46) for causing rotation of the bristle-containing tuft (42) on that body (50). In one embodiment, a drift shaft (34) is provided with an elongate, helical gear (60) capable of being disposed in meshing engagement with each one of the individual pinion gears (46). In this way, rotation of the drive shaft (34) will cause rotation of the drive gear (60) and each of the pinion gears (46) and the associated bristle bunches (42). In another embodiment, the drive member (34) is a shiftable rack with gear segments (70) to engage the separate pinion gears (46). The invention preferably comprises two pairs of elongate rows of the bristle tufts (42).

## Description

### 1. Field of the Invention:

This invention relates in general to certain new and useful improvements in electric toothbrushes, and more particularly, to a unique and simplified drive means for rotating the bristle bunches of an electric toothbrush head and a unique head assembly.

### 2. Brief Description of the Prior Art:

Most of the commercially available electric toothbrushes are quite complex and employ an operating mechanism which uses a large number of drive components. Exemplary of one of these prior art tooth brushes is U.S. Patent No. 4,156,620, dated May 29, 1979 to Clemens. In the Clemens Patent, a rather complex mechanism is employed, both for driving the bristles in a rotating action, and for mounting the bristles on a head. As a result, these prior art drive mechanisms are not only unduly complex, but they are more frequently subject to breakdowns which usually results in discarding of the electric toothbrush.

In addition, the complex drive mechanisms of the type taught in the Clemens Patent, and which are employed in the other commercially available electric toothbrushes, are costly to manufacture and hence, the sales price of these electric toothbrushes is rather high. As a result, the complexity and resultant high cost militates against any widespread use of these electric toothbrushes.

### DESCRIPTION OF THE DRAWINGS

In the accompanying drawings:
Figure 1 is a bottom plan view of an electric toothbrush constructed in accordance with and embodying the present invention;
Figure 2 is a vertical sectional view taken through the toothbrush of Figure 1 and showing a portion of the drive assembly forming a part thereof;
Figure 3 is a plan view of a head assembly taken substantially along line 3-3 of Figure 2;
Figure 4 is an exploded plan view substantially taken along line 4-4 of Figure 3;
Figure 5 is an enlarged side elevational view of one of the bristle-containing tufts forming part of the electric toothbrush of the present invention;
Figure 6 is an exploded schematic perspective view showing the components of one form of drive mechanism constructed in accordance with and embodying the present invention;
Figure 7 is an exploded schematic perspective view showing the components of an alternate embodiment of the drive mechanism; and
Figure 8 is an exploded schematic perspective view showing still a further embodiment of a drive mechanism constructed in accordance with and embodying the present invention and inverted for clarity.

### DETAILED DESCRIPTION OF PREFERRED EMBODIMENTS

Referring now in more detail, and by reference characters to the drawings which illustrate several preferred embodiments of the invention, A designates an electric toothbrush of the type having an elongate handle 10 with a removable stem section 12. The handle 10 will normally contain a battery source of power and a drive motor (both not shown) for operating a drive shaft 14 which extends outwardly from the handle 10. Furthermore, a manually operable control switch 16 is mounted on the handle 10 for operation by a user in order to turn the toothbrush on and off.

A head assembly 18 is located at one end of the stem 12 and in this case, the head assembly 18 comprises a housing 20 integrally formed at the forward end of the stem 12. The housing 20 is provided with an interior cavity 22 to house certain components of the drive mechanism and is also provided with a lower open end 24 communicating with the cavity 22.

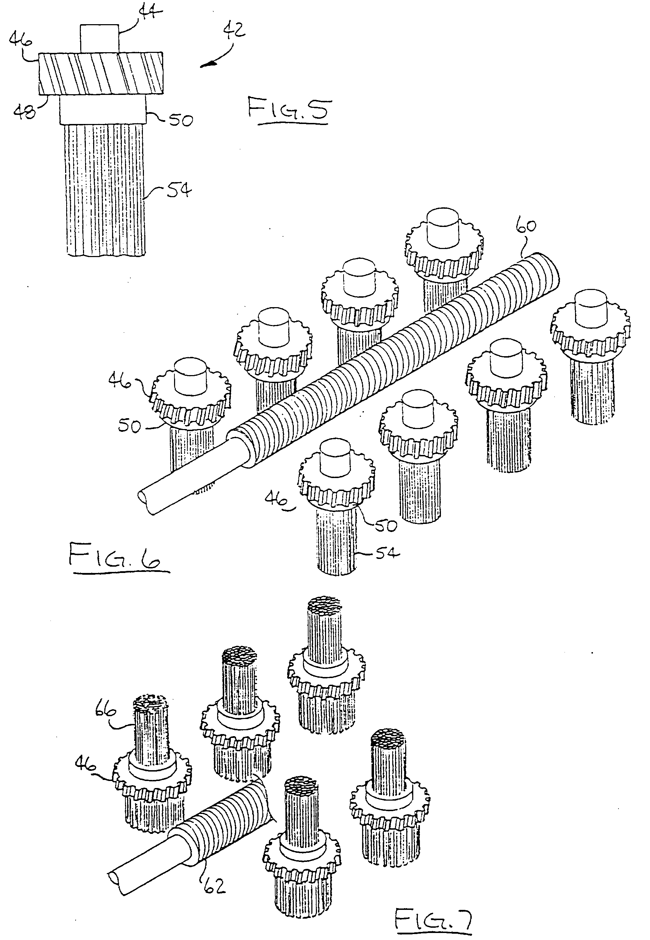

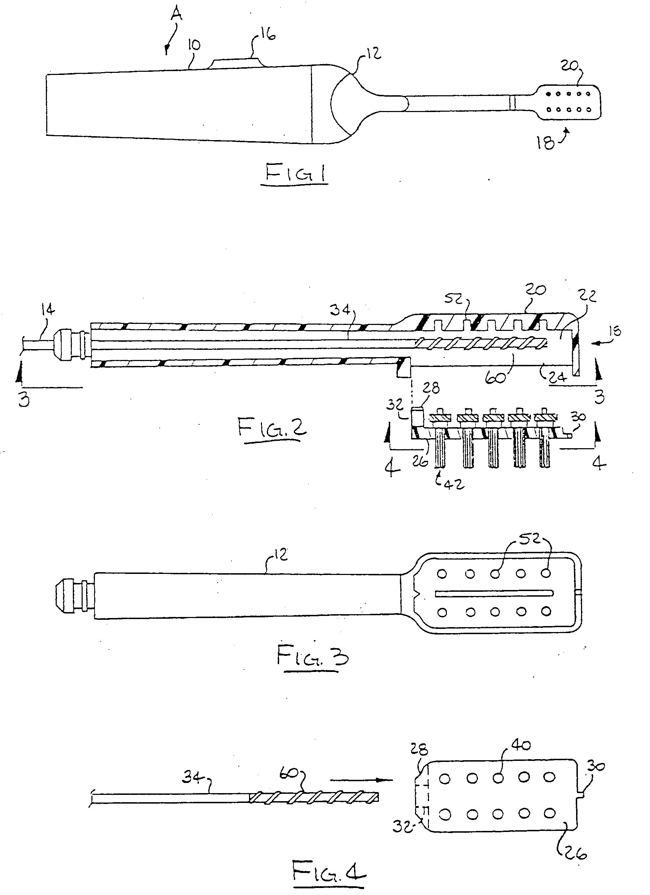

A plate 26 is provided for connection to the housing 20 in a manner to be hereinafter described, and is adapted to extend over the open end 24 and thereby fully enclose the cavity 22. The completed assembly 18 is best illustrated in Figures 1 and 2 of the drawings. The plate 26 is relatively flat as shown and is provided at its left-hand end, reference being made to Figure 2 with an enlarged flange 28. The opposite end the plate 26 is provided with a hook 30 which is adapted to hook onto the inside of the cavity at the edge of the opening 24. The enlarged flange 28 is provided with a central opening 32 sized and located to receive a an extension 34 of the drive shaft 14. In accordance with this construction, when the drive shaft extends through the opening 32, it will hold the left-hand end of the plate 26 and the hook 30 will hold the right-hand end of the plate within the opening 24.

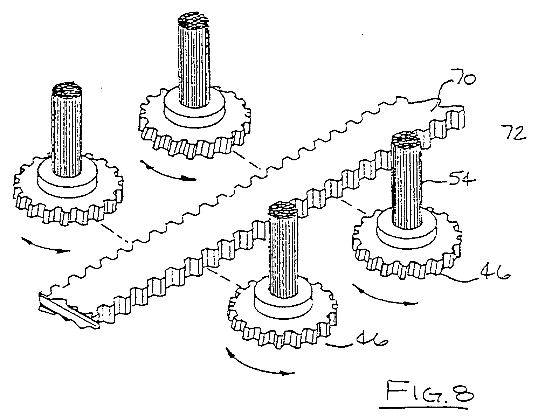

The plate 26 is also provided with two rows of generally parallel tuft receiving openings 40 and with each of the openings 40 in each row being in general alignment. Each of these openings 40 in the pairs of rows are designed to receive a tuft assembly of the type more fully illustrated in Figure 5.

Each of the tuft assemblies 42 comprises a body 44 having a pinion gear 46 integrally formed therewith. The pinion gear 46 is actually formed by means of an annular gear segment in the manner as best illustrated in Figures 2 and 5 of the drawings. By reference to Figure 2, it can be observed that an annular lower surface of the pinion gear 46 serves as a bearing surface 48 which will seat upon the upper surface of the plate 26. The pinion gear 46 also integrally merges into a diameterally reduced bearing ring 50 sized to extend through and bear against the opening 40. In accordance with this construction, each body 44 integrally provides the bearing means and the seating means for being retained on the plate 26. Moreover, each body is integrally provided with a pinion gear, such as the pinion gear 48 which cooperates with and forms part of the drive means, as hereinafter described.

By reference to Figures 2 and 3, it can be observed that the upper end of the body 44 is formed in the shape of a reduced locating pin. This upper end is located to fit within a corresponding recess 52 formed in the interior surface of the housing 20. Thus, each of the tuft bodies are retained in a fixed but rotatable position within the housing 20.

Mounted on and extending downwardly from the body 44 are a plurality of bristles 54 and which are located in a tuft or bunch. These bristles are of the type normally found in electric toothbrushes and, for that matter, in conventional non-powered toothbrushes. Thus, plastic filament bristles and the like are used.

By further reference to Figures 2-4, it can be seen that each of the pinion gears 46 will be located within the housing and will be retained therein in a fixed, but rotatable, position, as aforesaid, by means of the diameterally reduced bearing ring 50 and the seating surface 48 on the body 44, as well as the upper end of the body 44. In effect, the bristles will then project downwardly from the plate 26 and outwardly from the plate 26.

The right-hand end of the shaft extension 34 is integrally formed with a helical drive gear 60 which is located to mesh with each one of the individual pinion gears 46. By reference to Figure 6, it can be seen that the helical drive gear 60 has a length to extend between all of the pinion gears 48 in each row. Thus, when the drive shaft is rotated, it will cause rotation of the helical drive gear 60 which will, in turn, cause rotation of each of the pinion gears 48 and hence, the bristle-containing tufts.

Figure 7 illustrates an alternate embodiment of the invention wherein a relatively short helical drive gear 62 is employed. Also in this embodiment, each of the pinion gears 48 in each row are disposed in meshing engagement with each other, as best illustrated in Figure 7. Further, and in this embodiment, the helical drive gear 62 is disposed in meshing engagement with only one pinion gear in one row, and only one pinion gear in the opposite row. Thus, when the drive gear 62 is rotated, it will cause the drive pinions in that same row to rotate and, since the drive pinions disposed in meshing engagement with the drive gear are also disposed in meshing engagement with gears on each of its opposite sides, all of the pinion gears in each row will rotate, as well.

Figure 8 illustrates a further modified embodiment of the invention which uses a shiftable rack 70. This rack 70 contains gear segments 72 on each of its opposite sides and which are disposed in meshing engagement with the pinion gears 48. Furthermore, the rack may be designed for reciprocative operation, that is, in a back and forth operation. In this way, the rack can cause rotation of the bristles of each row in one direction, and then in an opposite direction. Any suitable mechanism for causing the reciprocative motion could be employed as, for example, a reversible electric motor which will reverse directions after a predetermined time period of operation, or the like.

## Claims

1. An electrically powered toothbrush having a toothbrush head at an end of the toothbrush; and a plurality of rows of bristles containing tufts carried by said head for rotation and extending outwardly from said head; an improvement comprising:
a) a driven pinion gear on each said tuft and being rotatable with said tuft;
b) a drive member powered for driving movement; and
c) a driving gear segment on said drive member and being located to rotate said driven pinion gear on each said tuft so that when said driving gear segment is moved, it will cause each of said tufts on each of said rows to rotate.

2. The electrically powered toothbrush of Claim 1 further characterized in that said driving member is a reciprocatively shiftable rack.

3. The electrically powered toothbrush of Claim 1 further characterized in that said driving member is a drive shaft and said driving gear segment is a drive gear disposed in meshing engagement with said driven pinion gears and said drive gear is rotatable to cause rotation of said driven pinion gears.

4. The electrically powered toothbrush of Claim 3 further characterized in that said drive gear is disposed in meshing engagement with only one pinion gear in each row and each of the other pinion gears in that row are disposed in meshing engagement with one another.

5. The electrically powered toothbrush of Claim 3 further characterized in that said driving gear is disposed in meshing engagement with each said driven pinion gear.

6. An improved head assembly for use with an electrically powered toothbrush, said improved head assembly comprising:
a) a plate having a plurality of openings extending therethrough;
b) fastening means associated with said plate to be releasably retained by an elongate stem of a toothbrush;
c) a plurality of bodies with each said body holding a plurality of bristles formed into a tuft of the bristles;
d) bearing means associated with each said body holding the body within one of the openings in said plate for rotation therein; and
e) a pinion gear on each said body and located to be driven by a driving member forming part of the toothbrush.

7. The electrically powered toothbrush of Claim 6 further characterized in that said pinion gear is integral with said body.

8. The electrically powered toothbrush of Claim 7 further characterized in that said bearing means comprises a diameterally reduced section on and integral with said body for supporting the body within the associated openings.

9. The electrically powered toothbrush of Claim 8 further characterized in that said body rests on said plate and said bristles extend through an opening of said plate and outwardly therefrom.

10. An improved head assembly forming part of an electrically powered toothbrush, said head assembly comprising:
a) a stem section;
b) an enlarged cavity at one end of said stem section and having an outwardly facing opening;
c) a plate having a plurality of openings;
d) retaining means on said plate to releasably hold said plate over the outwardly facing opening of said cavity;
e) a plurality of bristle-containing tufts supported by said plate at each of said openings; and
f) drive means associated with each of said tufts for causing a rotary action of the bristles in the tufts, said drive means of each of said tufts being located in said cavity of said stem section.

11. The electrically powered toothbrush of Claim 10 further characterized in that said retaining means comprises a flange extending from said plate into said cavity and having an aperture to receive a drive shaft and which drive shaft is journaled in a fixed but rotatable position and thereby aids in releasably holding said plate.
